# DEMANDE DE BREVET EUROPEEN

(11) **EP 2 270 640 A1**
(43) Date de publication de la demande: **05.01.2011**
(21) Numéro de dépôt: 10164858.2
(22) Date de dépôt: 03.06.2010
(51) Int. Cl.: G06F 3/048

(54) **Procédé de gestion de l'affichage d'une fenêtre d'une application sur un écran, un programme et un terminal l'utilisant**

(30) Priorité: 26.06.2009 FR 0954368
(71) Demandeur: France Telecom, 75015 Paris (FR)
(72) Inventeur: Ouchia, Medhi, 29400 LANDIVISIAU (FR); Lebouc, Maryline, 22300 LANNION (FR)

(57) **Abrégé**

L'invention concerne un procédé de gestion de l'affichage d'une fenêtre d'une application sur un premier écran, un programme et un terminal l'utilisant. En particulier, le terminal est une table interactive.

Un objet de l'invention est un procédé de gestion de l'affichage d'une fenêtre (102) d'une application sur un premier écran (10) comportant la détermination (MODIF PARAM) d'un premier paramètre d'affichage de ladite fenêtre (102) en fonction d'un deuxième paramètre d'un élément d'activation (101) lors d'une activation de ladite application au moyen dudit élément d'activation (101).

## Description

L'invention concerne un procédé de gestion de l'affichage d'une fenêtre d'une application sur un premier écran, un programme et un terminal l'utilisant. En particulier, le terminal est une table interactive.

Dans le cadre d'une interface utilisateur disponible sur un écran placé à l'horizontal tel qu'une table interactive, il s'avère difficile de présumer de la position de l'utilisateur autour de cet écran et de gérer correctement l'orientation de l'affichage.

Une première solution envisagée est de découper l'écran en plusieurs zones: lorsque l'écran est rectangulaire, par exemple en divisant l'écran en deux rectangles dans sa longueur, rectangle dont la base est le bord de l'écran dans sa longueur. Ainsi, toutes les données affichées sont orientées par rapport à la base de la zone rectangulaire dans laquelle elles sont affichées.

Cette solution est intéressante lorsque le nombre d'utilisateurs de la table est toujours le même (deux utilisateurs dans notre cas). Si un utilisateur se trouve seul face à une telle interface, il ne pourra en utiliser que la moitié car l'orientation de l'autre moitié ne lui conviendra pas.

La demande de brevet américain US20070157095 propose à un une interface permettant à un utilisateur de sélectionner une zone d'un écran qu'il souhaite réorienter à sa convenance et mettant ensuite à sa disposition des outils d'orientation pour redéfinir l'orientation de cette zone de manière dynamique.

Suivant la place de l'utilisateur par rapport à la table et l'orientation prédéfinie des données affichées, cette solution peut s'avérer lourde car l'utilisateur devra à chaque fois qu'il fait afficher de nouvelles données les sélectionnées et les réorienter.

Un des buts de la présente invention est de remédier à des inconvénients de l'état de la technique.

Un objet de l'invention est un procédé de gestion de l'affichage d'une fenêtre d'une application sur un premier écran comportant la détermination d'un premier paramètre d'affichage de ladite fenêtre en fonction d'un deuxième paramètre d'un élément d'activation lors d'une activation de ladite application au moyen dudit élément d'activation.

Ainsi, un utilisateur peut définir indiquer en modifiant uniquement l'élément activateur au moins un paramètre d'affichage pour toutes les fenêtres d'application qui seront ouvertes ensuite à l'aide de cet élément.

Avantageusement, le premier paramètre d'affichage de ladite fenêtre et le deuxième paramètre dudit élément d'activation concernent une orientation, respectivement, de ladite fenêtre par rapport audit premier écran et dudit élément d'activation par rapport à une zone de référence.

Ainsi, la définition du paramètre d'orientation des futures fenêtres d'application se fait aisément par simple changement de l'orientation de l'élément d'activation, par exemple la souris.

Avantageusement, ladite zone de référence est constituée par ledit premier écran et ledit deuxième paramètre concerne une orientation d'un affichage dudit élément d'activation par rapport audit premier écran.

Ainsi, sur une table interactive, les fenêtres d'application s'ouvrent toujours dans le même sens que le menu et/ou la matrice d'icônes.

Avantageusement, ledit élément d'activation est un menu circulaire réorientable à 360°.

Ainsi, le menu est plus aisé à réorienter car il n'est pas nécessaire que le menu soit parallèle au bord de l'écran pour déterminer une orientation des fenêtres.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif faisant partie d'un terminal et étant conçus pour commander l'exécution des différentes étapes de ce procédé.

L'invention vise donc aussi un programme comprenant des instructions de code de programme pour l'exécution des étapes du procédé de gestion selon l'une quelconque des revendications précédentes lorsque ledit programme est exécuté par un processeur.

Ce programme peut utiliser n'importe quel langage de programmation et être sous la forme de code source, code objet ou code intermédiaire entre code source te code objet tel que dans une forme partiellement compilée ou dans n'importe quelle autre forme souhaitable.

L'invention vise aussi un support d'informations sur lequel est stocké un programme selon la revendication précédente.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. LE programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessous. Un composant matériel correspond à tout élément d'un ensemble matériel (ou hardware) apte à mettre en oeuvre une fonction ou un ensemble de fonctions.

L'invention a également pour objet un dispositif de gestion de l'affichage d'une fenêtre d'une application sur un premier écran comportant des moyens de détermination d'un premier paramètre d'affichage de ladite fenêtre en fonction d'un deuxième paramètre d'un élément d'activation lors d'une activation de ladite application au moyen dudit élément d'activation.

L'invention a aussi pour objet un terminal comportant un premier écran et des moyens de détermination d'un premier paramètre d'affichage de ladite fenêtre en fonction d'un deuxième paramètre d'un élément d'activation lors d'une activation de ladite application au moyen dudit élément d'activation.

Avantageusement, ledit premier écran est un écran tactile.

Avantageusement, le terminal consiste en une table interactive.

Les caractéristiques et avantages de l'invention apparaîtront plus clairement à la lecture de la description, faite à titre d'exemple, et des figures s'y rapportant qui représentent :
- Figure 1, un schéma bloc illustrant le procédé de gestion de l'affichage d'une fenêtre d'une application sur un premier écran, selon l'invention,
- Figure 2, un terminal interactif mettant en oeuvre le dispositif de gestion de l'affichage d'une fenêtre d'une application sur un premier écran, selon l'invention,
- Figures 3a à 3e, un scénario d'ouverture de fenêtres d'application mettant en oeuvre le procédé selon l'invention dans le cas où les premier et deuxième paramètres sont des paramètres d'orientation,
- Figures 4a à 4e, un scénario d'ouverture de fenêtres d'application mettant en oeuvre le procédé selon l'invention dans le cas où les premier et deuxième paramètres sont des paramètres de position,
- Figures 5a à 5e, un scénario d'ouverture de fenêtres d'application mettant en oeuvre le procédé selon l'invention dans le cas où les premier et deuxième paramètres sont des paramètres de style.

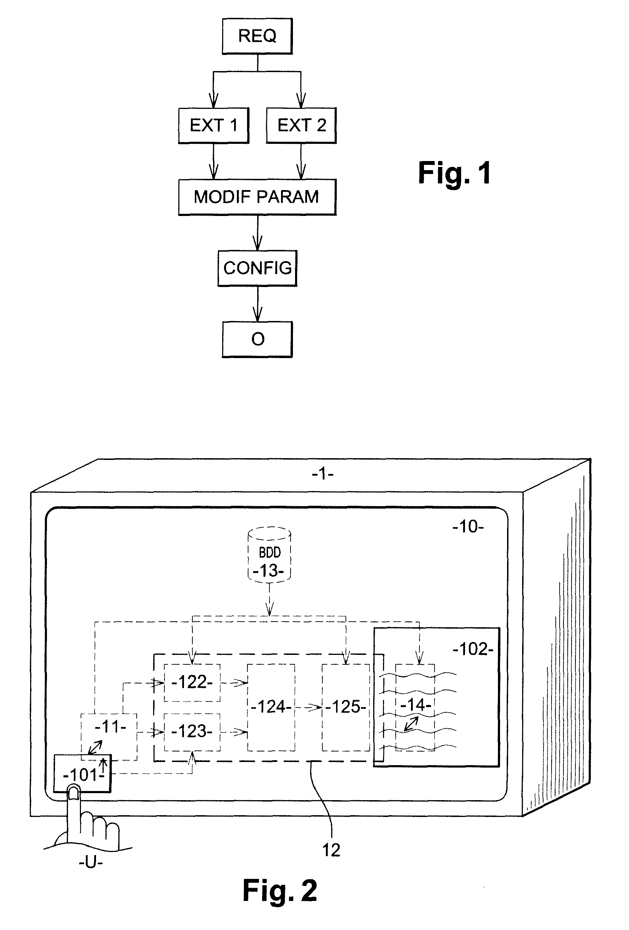

Dans la première partie de la description concernant les figures 1 et 2, celle-ci sera faite dans le cas d'une table interactive pour laquelle l'élément d'activation est un menu listant une série d'applications disponibles, les premier et deuxième paramètres concernent l'orientation sur l'écran de la table interactive, respectivement, d'une fenêtre d'une application telle qu'un album photo, un catalogue de VOD, etc. et du menu.

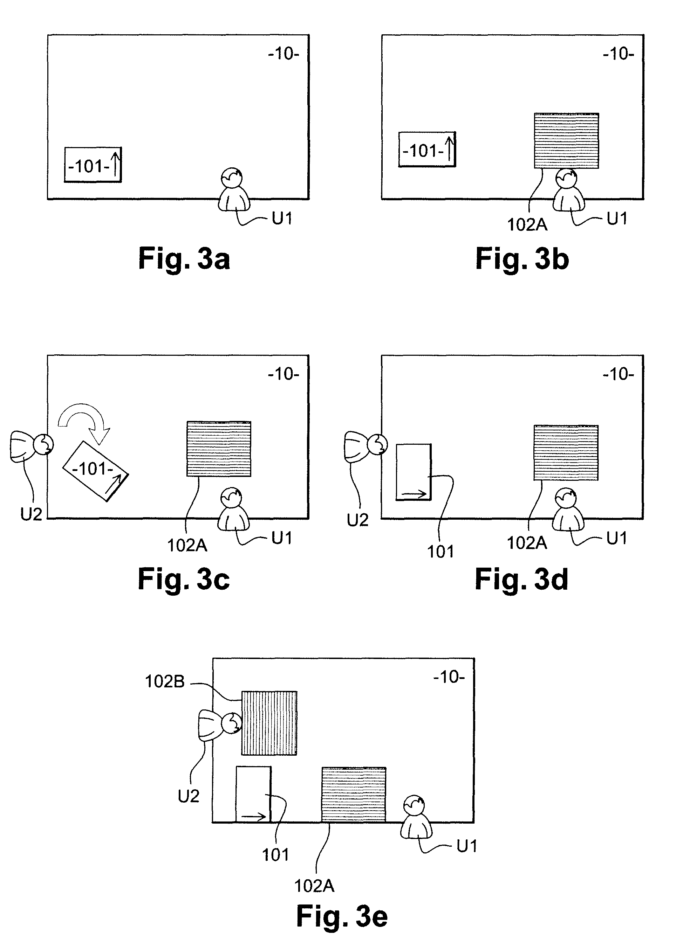

Cette description n'est pas limitative comme le montreront les exemples de scénario des figures 3a-3e, 4a-4e et 5a-5e. En effet, l'élément d'activation peut aussi bien être un menu, une icône affiché sur le premier écran ou un deuxième écran, ou un dispositif d'activation tel qu'une souris, un stylo interactif, etc. En outre, le premier paramètre d'affichage de la fenêtre d'application est aussi bien un paramètre d'orientation d'affichage, un paramètre de position d'affichage, un paramètre de style d'affichage, etc. et le deuxième paramètre de l'élément d'activation est aussi bien un paramètre d'orientation, de position, de style, de type, etc. Et, l'application est tout type d'applications nécessitant un affichage sur un écran: traitement de texte, album photo, télévision, catalogue de VOD, DAO, etc. De plus, le dispositif selon l'invention est mis en oeuvre dans tout type de terminal disposant d'un écran pour afficher une fenêtre d'une application à la demande d'un utilisateur grâce à un élément d'activation.

Les différents modes de réalisation décrits peuvent être implémentés seuls ou en combinaison.

La figure 1 illustre le procédé de gestion de l'affichage d'une fenêtre d'une application sur un premier écran. Le procédé comporte au moins une détermination MODIF PARAM d'un premier paramètre d'affichage de ladite fenêtre en fonction d'un deuxième paramètre d'un élément d'activation lors d'une activation de ladite application au moyen dudit élément d'activation.

Dans un mode de réalisation particulier, un premier paramètre est extrait ExT1 préalablement à cette détermination, notamment d'une base de données de configuration spécifique ou non à ladite application. La détermination consiste alors, éventuellement, à modifier ce premier paramètre en fonction d'un deuxième paramètre d'un élément d'activation lors d'une activation de ladite application au moyen dudit élément d'activation

Dans un mode de réalisation particulier, le deuxième paramètre est extrait ExT2 préalablement à cette détermination, notamment d'une base de données de configuration spécifique ou non audit élément d'activation ou d'une requête d'activation émise par ledit élément d'activation pour déclencher l'ouverture d'une fenêtre de ladite application ou par détection dudit deuxième paramètre.

Dans un mode de réalisation particulier, une requête d'activation est émise REQ par ledit élément d'activation pour déclencher l'ouverture O d'une fenêtre de ladite application qui engendre la détermination du premier paramètre MODIF PARAM, et au préalable, le cas échéant, les extractions de premier et deuxième paramètres ExT1, ExT2.

Dans un mode de réalisation particulier, la configuration d'affichage de ladite fenêtre de ladite application est modifié CONFIG. pour prendre en compte le premier paramètre ainsi déterminé.

Dans un mode de réalisation particulier, la fenêtre de ladite application est ouverte O en tenant compte du premier paramètre ainsi déterminé.

La figure 2 illustre un terminal 1 mettant en oeuvre un dispositif de gestion de l'affichage d'une fenêtre d'une application 12 selon l'invention. Le terminal 1 comporte un premier écran 10 affichant un élément d'activation 101 et une fenêtre 102 d'une application. Le dispositif de gestion 12 comporte des moyens de détermination 124 d'un premier paramètre d'affichage de ladite fenêtre 102 en fonction d'un deuxième paramètre d'un élément d'activation 101 lors d'une activation de ladite application au moyen dudit élément d'activation 101. Ainsi, ladite fenêtre 102 d'application est affichée en tenant compte du premier paramètre déterminé par les moyens de détermination 124.

Dans un mode de réalisation particulier (non illustré), le terminal 1 ne comporte pas de dispositif de gestion 12 mais directement les moyens de détermination 124.

Dans un mode de réalisation particulier, l'écran 10 est un écran tactile et l'élément d'activation 101 est un menu ou une icône au moyen duquel l'utilisateur U active l'application par simple toucher.

Dans un mode de réalisation particulier, le terminal 1 comporte des moyens d'activation d'une application 11 associés à l'élément d'activation 101. Lesdits moyens d'activation 11 sont aptes à être déclenchés par l'utilisation dudit élément d'activation 101, c'est-à-dire par contact avec la zone de l'écran 10 affichant l'élément d'activation 101 dans l'exemple d'écran tactile.

Dans un mode de réalisation particulier, le terminal 1 comporte des moyens d'extraction du deuxième paramètre 123. Les moyens d'extraction 123 sont notamment commandés par les moyens d'activation 11. Les moyens d'extractions 123 illustrés par la figure 2 détectent le deuxième paramètre utilisé par l'élément d'activation 101 affiché sur l'écran 10. Dans des variantes de réalisation non illustrées, les moyens d'extraction 123 extraient le deuxième paramètre de la requête d'activation envoyée par l'élément d'activation 101 aux moyens d'activation 11 ou d'une base de données de configuration éventuellement spécifique aux éléments d'activation.

Dans un mode de réalisation particulier, le terminal 1 comporte des moyens d'extraction 122 du premier paramètre par défaut. Les moyens d'extraction 122 vont notamment rechercher le premier paramètre dans une base de données de configuration 13 éventuellement spécifique aux applications voire même à l'application activée.

Dans une variante de l'invention le terminal 1 comporte des moyens d'extraction (non illustrés) apte à permettre à la fois l'extraction des premier et deuxième paramètres.

Dans un mode de réalisation particulier, le terminal 1 comporte des moyens de mise à jour de la configuration 125. Ces moyens de mise à jour 125 reçoivent des moyens de détermination 124 le premier paramètre déterminé en fonction du deuxième paramètre lors de l'activation de l'application.

Dans un mode de réalisation particulier de l'invention, les moyens de mise à jour 125 extraient les paramètres de configuration de la fenêtre d'application d'une base de données de configuration 13 éventuellement spécifique aux applications voire même à l'application activée. Ces paramètres de configuration sont soit des paramètres par défaut, soit des paramètres personnalisés.

Dans un mode de réalisation particulier, lorsque les paramètres de configuration ont été mis à jour avec le deuxième paramètre reçus, les moyens de mise à jour 125 enregistre les paramètres mis à jour dans la base de données 13.

Suivant les modes de réalisation, le dispositif de gestion 12 comporte éventuellement un ou plusieurs des moyens suivants en sus des moyens de détermination du deuxième paramètre 124:
- les moyens d'extraction du premier paramètre 122,
- les moyens d'extraction du deuxième paramètre 123,
- les moyens de mise à jour de la configuration 125,
- la base de données 13.

Dans un mode de réalisation particulier, le terminal comporte des moyens d'affichage 14 d'une fenêtre d'une application. Lesdits moyens d'affichage 14 utilisent les paramètres de configuration comportant le premier paramètre déterminé par les moyens de détermination 124 pour afficher la fenêtre 102.

Dans un mode de réalisation particulier, les moyens d'affichage 14 reçoivent les paramètres de configuration des moyens de mise à jour 125 du dispositif de gestion d'affichage 12.

Dans une alternative non illustrée, les moyens d'affichage vont chercher les paramètres de configuration dans la base de données 13 après mis à jour avec le premier paramètre déterminé par les moyens de détermination 124.

Dans une autre alternative non illustrée, les moyens d'affichage reçoivent le premier paramètre déterminé des moyens de détermination 124 et vont rechercher les autres paramètres dans la base de données 13. Eventuellement, la réception du premier paramètre déterminé des moyens de détermination 124 peut déclencher la recherche des autres paramètres par les moyens d'affichage 14 ou l'envoi de ces autres paramètres par la base de données 13 sur requête des moyens de détermination 124 ou des moyens d'activation 11.

Dans un mode de réalisation non illustré de l'invention , les moyens d'activation 11 déclenchent l'affichage de la fenêtre 102 par les moyens d'affichage 14 qui préalablement à l'affichage déclenche la détermination par les moyens de détermination 124 du premier paramètre et déclenche l'affichage à la réception du premier paramètre ainsi déterminé.

Ainsi, les moyens d'activation 11 et/ou les moyens d'affichages 14 et/ou la base de données 13 et/ou le dispositif de gestion 12 et/ou, en particulier, les moyens de détermination 124 et/ou les moyens d'extraction 122 et/ou les moyens d'extraction 123 et/ou les moyens de mise à jour 125 sont utilisées pour toutes les applications mises en oeuvre sur le terminal 1, sont utilisées pour des applications spécifiques pour lesquelles un lien à été fait préalablement avec l'élément d'activation 101 ou sont spécifiques à une application (les moyens seront, dans ce cas, multipliés pour toutes les applications pour lesquelles un lien es souhaité par le fabricant d'application et/ou le fabricant du terminal et/ou l'utilisateur).

Les figures 3a à 3e illustrent un scénario d'utilisation de l'invention afin de mieux comprendre les différentes étapes du procédé de gestion d'affichage. Dans ce scénario d'utilisation, le terminal 1 est une table interactive constitué d'un écran 10, notamment un écran tactile, le premier paramètre est une orientation de l'affichage de la fenêtre 102 par rapport à l'écran 10, et le deuxième paramètre est une orientation de l'affichage de l'élément d'activation 101, par exemple un menu, par rapport à l'écran 10.

Un premier utilisateur U1 décide d'utiliser la table interactive, il se place face à l'une des longueurs de l'écran 10. Le menu 101 étant déjà orienté face cette longueur de l'écran 10 (c'est-à-dire face au premier utilisateur U1), l'utilisateur U1 manipule le menu 101 pour activer une application, notamment un album photo comme le montre la figure 3a.

Le dispositif de gestion selon l'invention détermine l'orientation de l'affichage de la fenêtre 102A de l'album photo en fonction de l'orientation du menu 101 par rapport à l'écran 10. En l'occurrence, l'orientation de l'affichage de la fenêtre 102A est identique à celle du menu 101 par rapport à l'écran 10. Ainsi, comme le montre la figure 3b, l'album photo 102A s'ouvre face à l'utilisateur U1.

Un deuxième utilisateur U2 décide d'utiliser la table interactive, il se place face à l'une des largeurs de l'écran 10. Le menu 101 étant difficilement lisible pour lui, il en change l'orientation pour le placer face cette largeur de l'écran 10 (c'est-à-dire face au deuxième utilisateur U2) comme l'illustre la flèche de la figure 3c.

Une fois le menu 101 réorienté, l'utilisateur U2 manipule le menu 101 pour activer une application, notamment un catalogue de vidéo à la demande (VOD) comme le montre la figure 3d.

Le dispositif de gestion selon l'invention détermine l'orientation de l'affichage de la fenêtre 102B du catalogue VOD en fonction de l'orientation du menu 101 par rapport à l'écran 10. L'orientation de l'affichage de la fenêtre 102B est identique à celle du menu 101 par rapport à l'écran 10. Ainsi, comme le montre la figure 3e, le catalogue de VOD 102B s'ouvre face à l'utilisateur U2 sans modifier l'orientation de l'album photo 102A consulté par l'utilisateur U1.

Dans un mode de réalisation particulier, le menu 101 est un menu circulaire réorientable à 360° ainsi le premier paramètre d'orientation n'est, notamment, pas égale à l'orientation angulaire exacte du menu 101 par rapport à l'écran 10 mais seulement à son orientation polaire (Nord, Sud, Est, Ouest de la table pour un écran carré ou rectangle, plus Nord-est, Nord-Ouest, Sud-est, Sud-ouest pour un écran octogonal, etc.). Ainsi, si l'écran 10 comporte des cotés comme illustré par les figures 3a à 3^{e}, les fenêtres 102 s'ouvriront toujours avec leur base parallèle au coté de l'écran formant base pour l'utilisateur U ayant activé l'application même si l'utilisateur a orienté grossièrement le menu 101 vers lui.

Dans une variante d'utilisation, tel qu'un bureau interactif, le premier paramètre d'orientation de l'affichage de la fenêtre d'application prédéterminée est égale en fonction de l'application soit au paramètre d'orientation du menu soit à l'inverse du paramètre d'orientation du menu, notamment pour des applications telles qu'une application d'exécution par un élève d'un cahier d'exercices qui sera présentée tête bêche au professeur manipulant le menu pour être face à l'élève qui est devant lui, par contre l'application de correction sera présentée face à lui.

Dans un mode de réalisation particulier, l'activation de l'application est demandé à partir d'un deuxième écran appartenant ou non au terminal interactif, par exemple, un terminal portable tactile (PDA, téléphone mobile) permettant de télécommander des applications sur un tableau interactif par exemple via liaison IR, Bluetooth ou Wifi. Sur l'écran de ce terminal portable, une fenêtre d'application d'interaction avec le tableau interactif constitue une zone de référence sur laquelle est affiché soit un menu soit une matrice d'icônes des applications disponibles sur le tableau interactif. L'orientation de l'affichage de la fenêtre 102 d'application sera alors déterminée soit en fonction de la position du terminal portable constituant alors l'élément d'activation 101 par rapport au premier écran 10 soit en fonction de l'orientation du menu ou de la matrice d'icône constituant alors l'élément d'activation 101 par rapport à la zone de référence.

Dans une variante de l'invention, la zone de référence est une partie de l'écran 10.

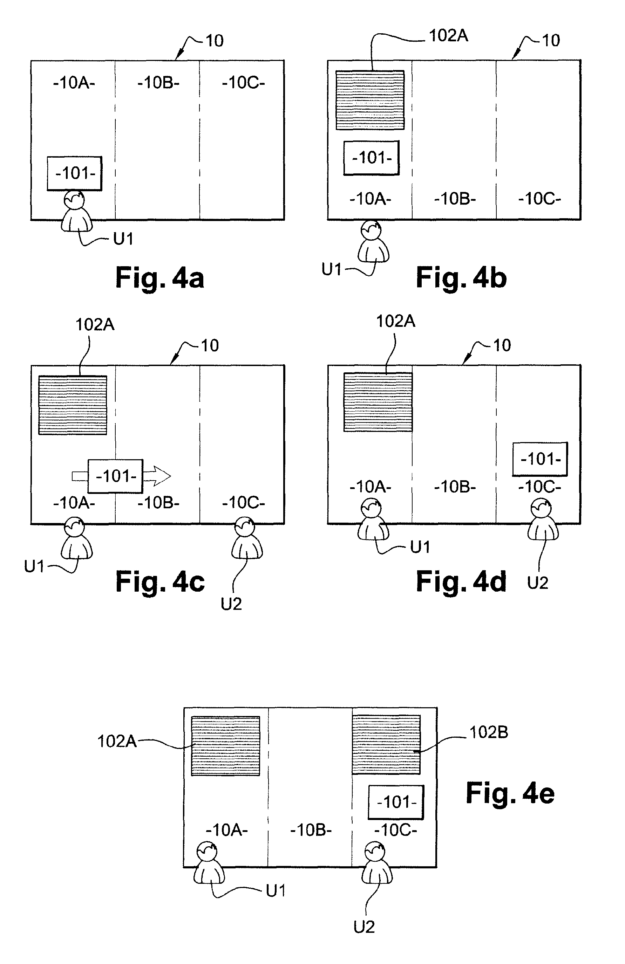

Les figures 4a à 4e illustrent un scénario d'utilisation de l'invention afin de mieux comprendre les différentes étapes du procédé de gestion d'affichage. Dans ce scénario d'utilisation, le terminal 1 est un tableau interactif constitué d'un écran 10, le premier paramètre est une position de l'affichage de la fenêtre 102 par rapport à l'écran 10, et le deuxième paramètre est une position de l'élément d'activation 101, par exemple un stylet interactif, par rapport à l'écran 10.

Un premier utilisateur U1 décide d'utiliser le tableau interactif, il se place face à une extrémité 10A des longueurs de l'écran 10 avec le stylet 101, l'utilisateur U1 manipule le stylet 101 pour activer une application, notamment un album photo comme le montre la figure 4a.

Le dispositif de gestion selon l'invention détermine la position de l'affichage de la fenêtre 102A de l'album photo en fonction de la position du stylet 101 par rapport à l'écran 10. En l'occurrence, la position de l'affichage de la fenêtre 102A est telle qu'elle soit dans la même partie 10A de l'écran 10 que la partie 10A de l'écran 10 face à laquelle se trouve le stylet 101. Ainsi, comme le montre la figure 4b, l'album photo 102A s'ouvre face à l'utilisateur U1.

Un deuxième utilisateur U2 décide d'utiliser le tableau interactif, il se place face à une autre partie 10C de l'écran 10 et récupère le stylet 101. Le stylet 101 change alors de position par rapport l'écran 10 comme l'illustre la flèche de la figure 4c.

Une fois le stylet 101 récupéré (et donc positionné devant la même partie 10C de l'écran 10 que l'utilisateur U2), l'utilisateur U2 manipule le stylet 101 pour activer une application, notamment un catalogue de vidéo à la demande (VOD) comme le montre la figure 4d.

Le dispositif de gestion selon l'invention détermine la position de l'affichage de la fenêtre 102B du catalogue VOD en fonction de la position du stylet 101 par rapport à l'écran 10. La position de l'affichage de la fenêtre 102B est identique à la position du stylet 101 par rapport à l'écran 10. Ainsi, comme le montre la figure 4e, le catalogue de VOD 102B s'ouvre face à l'utilisateur U2 sans modifier la position de l'album photo 102A consulté par l'utilisateur U1.

Dans une variante de l'invention, l'utilisateur U1 utilise un premier stylet 101₁ et l'utilisateur U2 un deuxième stylet 101₂. Les applications ouvertes 102A par le premier utilisateur U1 s'ouvriront alors dans la partie 10A de l'écran face à laquelle le premier stylet 101₁ est manipulé par le premier utilisateur U1, et les applications ouvertes 102B par le deuxième utilisateur U2 s'ouvriront alors dans la partie 10C de l'écran face à laquelle le deuxième stylet 101₂ est manipulé par le deuxième utilisateur U2.

Dans une variante de l'invention, l'utilisateur U1 se déplace devant le tableau interactif après avoir ouvert une première application 102A et face à une deuxième partie 10C du tableau manipule le stylet 101 pour ouvrir une deuxième application 102B. La deuxième application 102B s'ouvre face à l'utilisateur U1 sans modifier la première application 102A préalablement ouverte par l'utilisateur U1.

Dans un mode de réalisation particulier (non illustré), le stylet 101 est remplacé par une souris 101 manipulé sur un support horizontal. Le deuxième paramètre est alors constitué par la place de la souris par rapport à une zone de référence sur ce support. Cette zone de référence peut être définie une fois pour toute sur ce support ou lorsque le tableau interactif est démarré, la place de la souris sur un support horizontal quelconque et définit comme associé au point en bas à gauche de l'écran 10 du tableau interactif. Dans ce deuxième exemple, le support horizontal pourra être constitué de plusieurs tables placées face au tableau interactif et les intervenants pourront restés assis à leur table et simple se passer la souris pour ouvrir des applications sur la partie 10A, 10B, 10C qui leur font face.

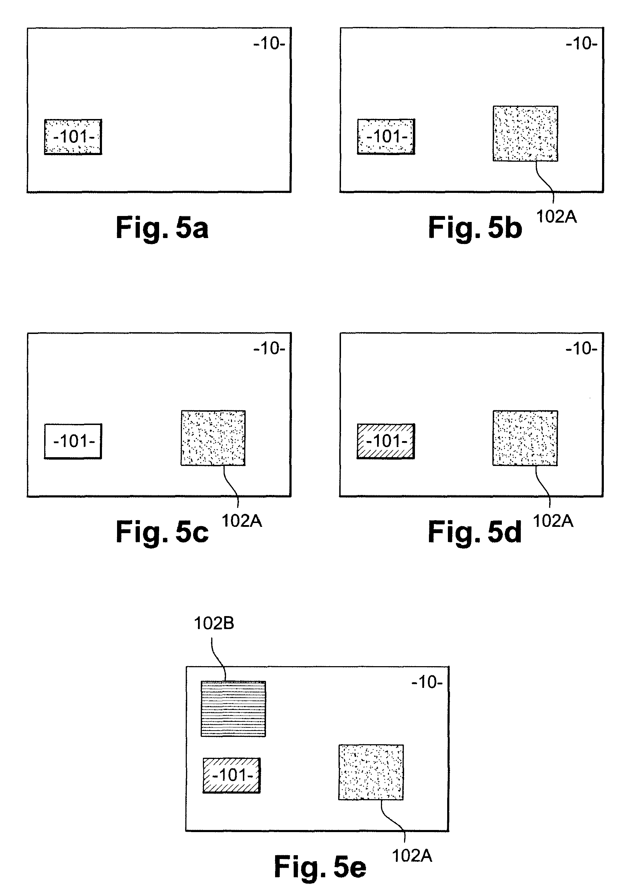

Les figures 5a à 5e illustrent un scénario d'utilisation de l'invention afin de mieux comprendre les différentes étapes du procédé de gestion d'affichage. Dans ce scénario d'utilisation, le terminal 1 est un terminal interactif constitué d'un écran 10, notamment un écran tactile, le premier paramètre est un paramètre de style d'affichage de la fenêtre 102 par rapport à l'écran 10, et le deuxième paramètre est un paramètre de style d'affichage de l'élément d'activation 101, par exemple un menu, par rapport à l'écran 10.

Un premier utilisateur U1 décide d'utiliser le terminal interactif. Le menu 101 étant déjà configuré pour lui, l'utilisateur U1 manipule le menu 101 pour activer une application, notamment un album photo comme le montre la figure 5a.

Le dispositif de gestion selon l'invention détermine le style de l'affichage de la fenêtre 102A de l'album photo en fonction du style du menu 101 par rapport à l'écran 10. En l'occurrence, le style de l'affichage de la fenêtre 102A est le style associé au style du menu 101 dans une base de données de style. Ainsi, comme le montre la figure 5b, l'album photo 102A s'ouvre dans un style personnalisé pour l'utilisateur U1.

Un deuxième utilisateur U2 décide d'utiliser le terminal interactif. Le style du menu 101 ne lui convenant pas (écriture trop grande, notamment), il en change (comme l'illustre le dégradé de la figure 5c) en indiquant au menu 101 l'utilisation, par exemple, de sa configuration personnelle en choisissant par exemple "menu de Untel" dans une liste de menus personnalisé ou du changement de taille de la police dans notre exemple.

Une fois le style du menu 101 modifié, l'utilisateur U2 manipule le menu 101 pour activer une application, notamment un catalogue de vidéo à la demande (VOD) comme le montre la figure 5d.

Le dispositif de gestion selon l'invention détermine le style de l'affichage de la fenêtre 102B du catalogue VOD en fonction du style du menu 101. Le style de l'affichage de la fenêtre 102B est le style associé au style du menu 101 dans une base de données. Ainsi, comme le montre la figure 5e, le catalogue de VOD 102B s'ouvre dans le style propre à l'utilisateur U2 sans modifier le style de l'album photo 102A consulté par l'utilisateur U1.

Dans une variante de l'invention, le style est la couleur de l'encadrement de la fenêtre 102 d'application permettant ainsi à chacun des utilisateurs U1 et U2 de facilement reconnaître les applications qu'il a ouvertes.

Dans un mode de réalisation particulier, plusieurs premiers paramètres d'affichage de la fenêtre 102 d'application sont déterminés en fonction d'un seul paramètre de l'élément d'activation 101, notamment, l'orientation et la couleur des cadres de fenêtres en fonction de l'orientation de la matrice d'icones 101.

## Revendications

1. Procédé de gestion de l'affichage d'une fenêtre d'une application sur un premier écran (10) , **caractérisé en ce que** ledit procédé de gestion comporte la détermination (MODIF PARAM) d'un premier paramètre d'affichage de ladite fenêtre (102) en fonction d'un deuxième paramètre d'un élément d'activation (101) lors d'une activation de ladite application au moyen dudit élément d'activation (101).

2. Procédé de gestion selon la revendication précédente **caractérisé en ce que** le premier paramètre d'affichage de ladite fenêtre (102) et le deuxième paramètre dudit élément d'activation (101) concernent une orientation, respectivement, de ladite fenêtre (102) par rapport audit premier écran (10) et dudit élément d'activation (101) par rapport à une zone de référence.

3. Procédé de gestion selon l'une quelconque des revendications précédentes **caractérisé en ce que** ladite zone de référence est constituée par ledit premier écran (10) et ledit deuxième paramètre concerne une orientation d'un affichage dudit élément d'activation (101) par rapport audit premier écran (10).

4. Procédé de gestion selon l'une quelconque des revendications précédentes **caractérisé en ce que** ledit élément d'activation (101) est un menu circulaire réorientable à 360°.

5. Programme comprenant des instructions de code de programme pour l'exécution des étapes du procédé de gestion selon l'une quelconque des revendications précédentes lorsque ledit programme est exécuté par un processeur.

6. Support d'informations sur lequel est stocké un programme selon la revendication précédente.

7. Dispositif de gestion de l'affichage d'une fenêtre d'une application sur un premier écran, **caractérisé en ce que** ledit dispositif de gestion comporte des moyens de détermination (124) d'un premier paramètre d'affichage de ladite fenêtre (102) en fonction d'un deuxième paramètre d'un élément d'activation (101) lors d'une activation de ladite application au moyen dudit élément d'activation (101).

8. Terminal, **caractérisé en ce que** ledit terminal comporte un premier écran (10) et des moyens de détermination (124) d'un premier paramètre d'affichage de ladite fenêtre (102) en fonction d'un deuxième paramètre d'un élément d'activation (101) lors d'une activation de ladite application au moyen dudit élément d'activation (101).

9. Terminal selon la revendication précédente **caractérisé en ce que** ledit premier écran (10) est un écran tactile.

10. Terminal selon l'une quelconque des revendications 8 ou 9 **caractérisé en ce que** ledit terminal (1) consiste en une table interactive.
